# EUROPEAN PATENT APPLICATION

(11) **EP 3 590 328 A1**
(43) Date of publication of application: **08.01.2020**
(21) Application number: 19382572.6
(22) Date of filing: 04.07.2019
(51) Int. Cl.: A01G 13/06

(54) **ANTI-FROST CANDLE**

(30) Priority: 06.07.2018 ES 201830677
(71) Applicant: Agroquimicos Lucas SL, 30530 Cieza (Murcia) (ES)
(72) Inventor: LUCAS FERNÁNDEZ, FRANCISCO JAVIER, 30530 Cieza (ES)
(74) Representative: Aguilar Catalán, Blanca

(57) **Abstract**

It is a candle applicable to protect crops from frost, in order to protect such crops. The candle is obtained based on a metallic tank (1), with a lid (3), inside which a volume of paraffin is placed (4) in which is embedded a wick (5) formed by a hollow quadrangular prism body of cardboard, impregnated with a polymer of inorganic salt, that has a series of honeycomb (6) shapes at least on its upper edge, that facilitate lighting and homogenise the combustion. The structure and composition of the candle make it emit less smoke, that is damaging to the crops to be protected and above all for the environment, users, operatives and even adjacent populations, as well as allowing it to last longer.

## Description

### STATE OF THE ART

This invention describes an anti-frost candle, foreseen correctly for its use in protection of crops against freezing. The object of the invention is to provide the agricultural sector with an effective, simple, cheap, safe system, that is based on placing candles near to the plants or lines of plants grown in order for these to protect the crops against low temperatures or freezing under safe conditions, thus obtaining greater agricultural yield.

### ANTECEDENTS OF THE INVENTION

Although there are systems or methods that allow certain crops to be protected against frost, be these in the open air or indoor, based on candles or lamps that generate enough heat to avoid the plants freezing, however the wicks used produce excessive smoke, as well as ash and other particles, so that is evidently harmful to the plants or crops in general, in addition to generating environmental pollution and inconveniencing the users, operatives and even adjacent populations. Moreover, such candles use wicks that do not combust the paraffin in a uniform manner, so they are consumed took quickly and in a scarcely effective manner. The inventor is not aware of the existence of anti-frost candles like that described and claimed in this invention patent application.

As examples of patents or utility models that might approach this technique, one may mention the following:
- CN203735184U *"Anti-frost smoke generator based on tea garden"* by Yi Xiao Yun Ma Lifeng Jian Jianyun and Han Wenyan, with a priority date on 27.01.2014. This utility model provides an anti-frost smoke generator based on tea leaves. It belongs to the technical field of disaster prevention due to late frost during the period when the fresh tea leaves are picked. The anti-frost smoke generator includes formation of the smoke system and an automatic lighting to control the system temperature. The smoke generated is purified through a filtering piece and this is added to the leaves sprayed by a sprinkler. The anti-frost smoke generator has the advantages of providing an anti-frost effect with high thermal efficiency and a long combustion time. The device is simple, practical, easy to operate, safe and reliable.
- CN204347598U *"Green agriculture microwave antifreeze system"* by Luo Shuguang, with a priority date on 21.01.2015. This utility model is related to a crop monitoring prevention system to avoid frost, that includes a wireless communication module, connected to an early alert platform that contains sensors distributed over the full area of the crop, a record management module, a disaster prevention module and a disaster analysis model module. The anti-frost system has the advantages of automatic monitoring, offering the user remote services enough time in advance for them to be able to take preventive measures regarding the crops.
- CN206380402U *"Farming protection system that prevents frostbite"* by Wang Chunqin and Wang Yongqiang, with a priority date on 26.12.2016. The utility model is related to the technical field of crop protection and discloses an electronic agricultural protection system that prevents crop freezing, making it much more effective to monitor the sown area. The system may effectively protect crops, effectively providing the effect of immediately warning people on their mobile terminal.
- CN202419641U *"Full-automatic semi-gasified alcohol-based fuel burner"* by Yan Shijiang et al., with a priority date on 16.01.2012. This utility model refers to a totally automatic semi-gasified alcohol-based fuel burner. According to the technical scheme, the invention may trace and monitor the flame, and it has the advantages of a low air to fuel ration, full combustion, energy saving and protection of the environment.

### EXPLANATION OF THE INVENTION

The anti-frost candle claimed in this invention resolves the issues described above in a fully satisfactory manner, based on a simple solution that is effective and, above all, safe for use in agriculture. To do so and more specifically, the candle in the invention includes a circular shaped metallic deposit or drum, with the relevant handle to be able to manage it swiftly and safely. A volume of paraffin is established inside the drum, which is complemented by a hermetically sealed lid and has the feature of the wick, instead of being a conventional product, of fabric or another material, being formed by a hollow quadrangular prismatic body, made of cardboard, embedded in the paraffin and from which it stands out only in a top stretch with a honeycomb pattern.

On the other hand, the wick according to the invention is impregnated with a polymer material based on polymerised inorganic salts, by which it manages to reduce the emission of smoke, ash and other particles during the combustion, making it complete, more homogeneous and safe, in addition to increasing the time the candle of the invention lasts. The solid residue resulting from combustion of the wick is not emitted into the environment, but rather remains inside the tank, so the resulting residue may subsequently be adequately managed under safe conditions, without any repercussion on the environment, in general, and on crops in particular.

Another important characteristic is that the tank or drum has a widened upper strip that allows more paraffin to be burned when the combustion process starts, which will generate an increased temperature faster and thus emit more heat that, although it may detract from the duration of the product will, however, provide greater frost protection for the crop.

The wick is obtained by shaping a sheet of preferably corrugated cardboard, affected by fold lines between which sectors are established to form the side faces of the hollow quadrangular prismatic body that is embedded inside the paraffin, that has end sectors with complementary attachment means to keep the hollow quadrangular prismatic body assembled. As a differentiated design, the wick will have honeycomb shapes both on the top edge as well as on the bottom edge, and may have a honeycomb shape on each one of its edges in each sector, or more than one honeycomb shape, so that, in any case, such honeycomb shapes facilitate combustion of the wick and balance the level of the paraffin when it turns liquid due to the heat, in addition to facilitating filling the drum in the packaging process, and to allow better assembly of the wick without the need for any additional element, such as glue, staples, etc....

Lastly, one may state that the honeycomb shapes may be replaced by orifices with different configurations: circular, elliptical, square, etc., and also follow variable size. Thus, it is a paraffin candle to combat frost in horticultural, fruit and vineyard crops, so that as the content is inside a metallic container, it achieves optimum heat emission and longer duration of the combustion, in addition to being easy to handle. One must also state that the material of the drum or tank is recyclable as it is metallic, and it is sufficiently resistant to avoid deforming due to the heat emitted. The lid with which the drum is complemented not only protects the paraffin with the wick, but also allows the candle to be extinguished easily when its purpose has ended, in addition to providing an external closing element that facilitates its handling.

### BRIEF DESCRIPTION OF THE DRAWINGS

To complement the description that is now going to be made, and in order to help to better understand the characteristics of the invention, according to a preferential example of its practical embodiment, attached as an integral part of that description there is a set of drawings in which, for illustrative but not limiting purposes, the following has been represented:

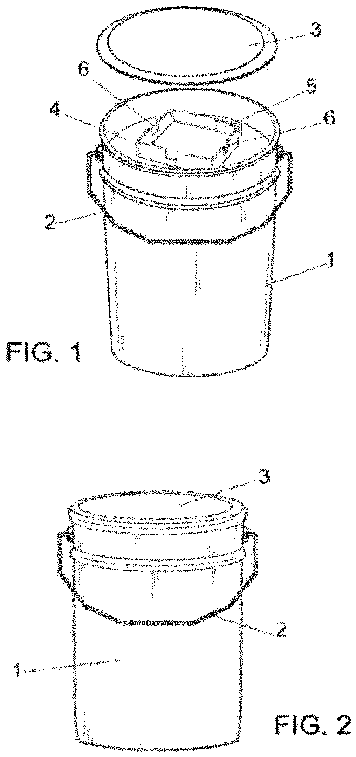

Figure 1. Shows a perspective view of an anti-frost candle made according to the object of this invention, with its independent lid.
Figure 2. Shows a perspective view of the device with the lid duly closed.
Figure 3. Shows a front elevation view of the device.
Figure 4. Finally, shows a ground plan view of the layout for the inorganic salt polymer impregnated cardboard sheet, from which the candle wick is obtained.

### PREFERENTIAL EMBODIMENT OF THE INVENTION

Considering the figures stated, one may observe how the anti-frost candle of the invention includes a tank or drum (1), of metallic material, equipped with a carrying handle (2) and a hermetic closing lid (3), so the interior of that tank or drum is used to contain a volume of paraffin (4) in which a wick is embedded (5) constituted by a quadrangular hollow body of corrugated cardboard or similar, that has the respective honeycomb shapes (6) on the top and bottom ends, that facilitate ignition of the wick. The wick is impregnated with an inorganic salt polymer solution, on the basis of which emission of smoke, ash and other particles is reduced, causing much more homogeneous combustion jointly with the configuration given to the wick, and increasing the duration of the combustion.

Lighting, once the lid (3) is removed, is carried out by applying a flame to the honeycomb shapes (6) of the body of the wick, so that configuration, as stated above, facilitates ignition due to maximising the surface to which the flame is initially applied.

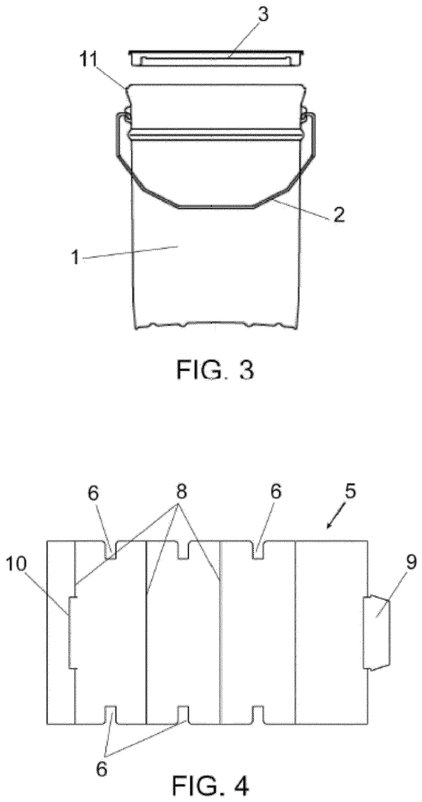

As is shown in figure 4, the sheet cardboard from which the wick (5) is obtained has complementary means of attachment on its side ends (9-10) to form the prismatic quadrangular body based on the relevant folding lines (8).

Lastly, one must point out that the top strip (11) of the tank (1) has a widening, as is shown in figure 3, that favours burning of the paraffin (4) due to allowing entry of a larger volume of oxygen, optimising protection of the crop where it is applied.

## Claims

1. Anti-frost candle that, being of the type that include an exterior drum (1) inside of which a volume of paraffin is placed (4) with a wick (5) to light that is embedded in the paraffin, a drum assisted by the relevant closing lid (3), **characterised by** the wick (5) being comprised of a hollow quadrangular prismatic body made of cardboard, impregnated with an inorganic salt polymer, a wick that has at least one honeycomb shape (6), fitting at least against the top edge of one of the faces of the wick, and that emerges from the volume of paraffin (4).

2. Anti-frost candle, according to claim 1, that is characterised because the exterior drum (1) may have a widening on the top stretch (11) matching its opening.

3. Anti-frost candle, according to claim 1, that is characterised because the exterior drum (1) may be manufactured of any kind of material that keeps the combustion temperature inside, without it suffering structural deformation or combustion, metallic materials being an example of such material.

4. Anti-frost candle, according to claim 1, that is characterised because the wick (5) may be manufactured from corrugated cardboard, or any similar material that is able to combust adequately and that is able to absorb paraffin inside.

5. Anti-frost candle, according to claim 1, that is characterised because the hollow quadrangular prismatic body is obtained by shaping a sheet of cardboard or similar material, that has matching complementary tabs and slots for insertion at its ends (9-10) to form the quadrangular prismatic body.
